# EUROPEAN PATENT SPECIFICATION

(11) **EP 3 645 362 B1**
(45) Date of publication and mention of the grant of the patent: **11.01.2023**
(21) Application number: 17915824.1
(22) Date of filing: 30.06.2017
(51) Int. Cl.: G01C 21/34, G01C 21/36, B60W 30/10, B60W 30/16, B60W 60/00

(54) **ACCESSIBILITY METHOD AND APPARATUS FOR AUTONOMOUS/SEMI-AUTONOMOUS DRIVING**
ZUGÄNGLICHKEITSVERFAHREN UND -VORRICHTUNG FÜR AUTONOMES/HALBAUTONOMES FAHREN
PROCÉDÉ ET APPAREIL D'ACCESSIBILITÉ POUR CONDUITE AUTONOME/SEMI-AUTONOME

(43) Date of publication of application: 06.05.2020
(73) Proprietor: INTEL Corporation, Santa Clara, CA 95054 (US)
(72) Inventor: ALVAREZ, Ignacio J., Portland, Oregon 97229 (US); EKANDEM, Joshua, Beaverton, Oregon 97001 (US)
(74) Representative: Rummler, Felix
(86) International application number: PCT/US2017/040355
(87) International publication number: WO 2019/005120

(56) References cited:
- EP-A1- 3 053 809
- WO-A1-2016/071012
- US-A1- 2015 219 464
- US-A1- 2015 348 335
- US-A1- 2016 223 345
- US-A1- 2016 332 535
- US-A1- 2016 370 194
- US-A1- 2016 370 194

## Description

### Technical Field

The present disclosure relates to the field of autonomous/semi-autonomous driving. In particular, the present disclosure is related to accessibility method and apparatus for autonomous/semi-autonomous driving.

### Background

The background description provided herein is for the purpose of generally presenting the context of the disclosure. Unless otherwise indicated herein, the materials described in this section are not prior art to the claims in this application and are not admitted to be prior art by inclusion in this section.

One of the key value propositions of autonomous/semi-autonomous driving (AD/semi-AD) vehicle is that they will provide mobile parity allowing people that were previously disenfranchised with the ability to go wherever they want. However, often times this includes, but is not limited to, those with permanent or temporary physical disabilities (i.e. , those who may be missing limbs, blind, require wheel-chairs or crutches, etc.). Under the current state of the art, this value proposition may not be fully realized if the AD/semi-AD vehicle parks or stops in a manner that renders entering and exiting the vehicle inaccessible to these target populations.

Existing fully automated vehicle development projects and implementations are highly focused on path planning and navigation solutions, the things that happen while people are in the car. However, little work has been done to address system capabilities needed to assist people getting in and out of the vehicle and taking into consideration environmental conditions and the accessibility needs of the passenger or driver.

US2015/0219464A1 describes an approach for determining a recommended passenger embarkation point to associate with a point of interest. An embarkation platform determines one or more candidate passenger embarkation points. The embarkation platform also processes contextual information associated with the one or more passenger embarkation points, the at least one passenger, the at least one vehicle, or a combination thereof to determined at least one recommended passenger embarkation point from among the onr or more candidate passenger embarkation points. Information regarding the at least one recommended embarkation point is then caused to be presented.

US2016/0370194A1 describes systems and methods for providing suggested locations for pick up and destination locations. Pick up locations may include locations where an autonomous vehicle can pick up a passenger, while destination locations may include locations where the vehicle can wait for an additional passenger, stop and wait for a passenger to perform some task and return to the vehicle, or for the vehicle to drop off a passenger. As such, a request for a vehicle may be received from a client computing device. The request may identify a first locations. A set of one or more suggested locations may be selected by comparing the predetermined locations to th first location. The set may be provided to the client computing device.

### Summary of Invention

The present invention is defined in the independent claims. Preferred features are recited in the dependent claims. In the following description, any embodiment referred to and not falling within the literal meaning of the claims is merely an example useful to the understanding of the invention. This is without prejudice to the question of realizations of the claimed invention by equivalent means, which is subject to national laws.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure 1 illustrates an overview of an autonomous/semi-autonomous driving (AD/semi-AD) system with an accessibility engine, in accordance with various embodiments.
Figure 2 illustrates an example operation flow for determining a specific stopping spot at a destination, according to some embodiments.
Figures 3 and 4 illustrate two example scenarios that can benefit from the accessibility method and apparatus of the present disclosure.
Figure 5A illustrates example dynamic occupancy grid maps for object classification, according to some embodiments.
Figure 5B illustrates an example presentation of safety, according to some embodiments.
Figure 6 illustrates an example apparatus suitable for use as an accessibility engine, or an on-board system to host an accessibility engine, in accordance with various embodiments.
Figure 7 illustrates an example computer readable medium with instructions configured to enable an on-board system to practice aspects of the present disclosure, in accordance with various embodiments.

### Detailed Description

Apparatus, method and computer readable medium associated with AD/semi-AD are disclosed herein. In embodiments, an apparatus for AD/semi-AD may comprise an accessibility engine disposed in an AD/semi-AD vehicle to control accessibility elements of the AD/semi-AD vehicle. The accessibility engine may be configured to receive sensor data from a plurality of sensors disposed in the AD/semi-AD vehicle, and determine a specific spot for the vehicle to stop at a destination for a passenger or driver to ingress or egress the vehicle, based at least in part on the sensor data and a model of the vehicle that includes information about accessibility elements of the vehicle, including determination of accessibility needs of the passenger or driver based at least in part on at least some of the sensor data. The accessibility needs of the passenger or driver are factored into the determination of the specific stopping spot at the destination.

In embodiments, the accessibility engine may include an accessibility classifier to recognize accessibility needs of a passenger or driver, at least when the vehicle is at a final approach distance to the destination, based at least in part on the sensor data of the plurality of sensors. In other embodiments, the accessibility engine may include an environmental safety classifier to provide dynamic segmentation of a surrounding area of the vehicle at least when the vehicle is at a final approach distance to the destination, based at least in part on the sensor data of the plurality of sensors, wherein the dynamic segmentation includes information that depicts safety levels of various segments of the surrounding area.

The accessibility engine includes an object detection classifier to generate a dynamic occupancy grid map of a surrounding area of the vehicle at least when the vehicle is at a final approach distance to the destination, based at least in part on the sensor data of the plurality of sensors, wherein the dynamic occupancy grid map may include information that depicts or allows discernment of a presence of objects within the surrounding area.

These and other aspects will be further described below. In the description to follow, reference is made to the accompanying drawings which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Operations of various methods may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiments. Various additional operations may be performed and/or described operations may be omitted, split or combined in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C). The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous. The terms "motor" and "engine" are synonymous unless the context clearly indicates otherwise.

As used hereinafter, including the claims, the term "autonomous/semi-autonomous vehicle" may refer to any one of assisted park vehicles, automated drive and park vehicles or fully automated navigate/park vehicles. Assisted park vehicles may be vehicles of current generation with advance driver assistance system (ADAS) having driver assistance functions (also referred to as computer-assisted driving). Automated drive and park vehicles may be vehicles of current or future generation with ADAS having self-driving or auto-pilot capabilities (i.e. without human driver), and fully automated navigate/park vehicles may be vehicles of a future generation with ADAS having autonomous driving capabilities where the passenger can be dropped off at a destination, and the vehicle can go park itself.

The term "module" may refer to, be part of, or include an Application Specific Integrated Circuit (ASIC), an electronic circuit, a programmable combinational logic circuit (such as a Field Programmable Gate Array (FPGA)), a processor (shared, dedicated, or group) and/or memory (shared, dedicated, or group) that execute one or more software or firmware programs having one or more machine instructions (generated from an assembler or from a high level language compiler), and/or other suitable components that provide the described functionality.

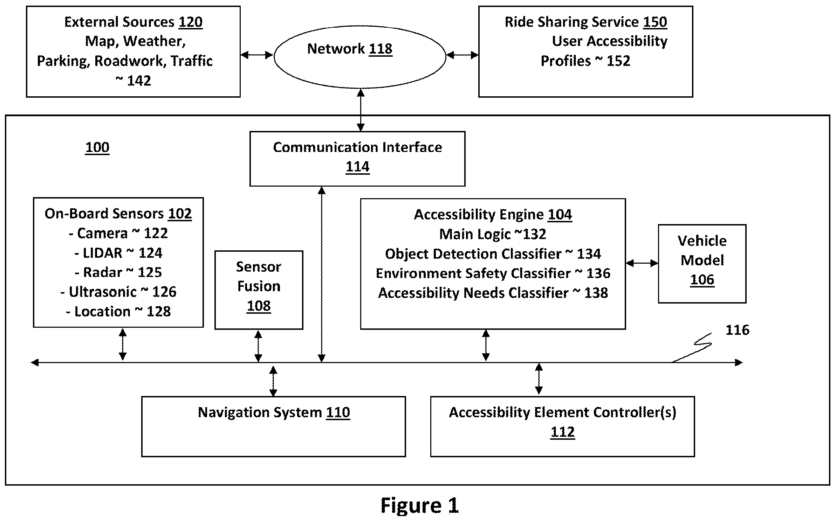

Referring now to Figure 1, wherein an overview of an AD/semi-AD system with an accessibility engine, designed to be disposed and operated in an AD/semi-AD vehicle, in accordance with various embodiments, is shown. As illustrated, AD/semi-AD system 100 may include on-board sensors 102, accessibility engine 104, and vehicle model 106 coupled with each other, in the embodiments, via system bus 116. For the illustrated embodiments, AD/semi-AD system 100 may further include sensor fusion unit 108, navigation system 110, one or more accessibility element controllers 112 and communication interface 114, also coupled to each other, and the earlier enumerated elements, via system bus 116.

In embodiments, on-board sensors 102 may include a plurality of sensors 122-128 of different sensor types to sense and output sensor data of a plurality of sensor data types about a surrounding area of the AD/semi-AD vehicle, on which AD/semi-AD system 100 is disposed and operates. For example, on-board sensors 102 may include a camera 122, radar 125 and ultrasonic sensor 126 to generate a plurality of visual, radar and ultrasonic images of the surrounding area, light detection and ranging (LIDAR) device 124 to generate detection and ranging signals about objects in the surrounding area, and/or location sensor 128 (such as Global Positioning System (GPS)) to output location data about the current location of the AD/semi-AD vehicle.

Vehicle model 106 may be a data structure that includes information about the accessibility elements of the AD/semi-AD vehicle. Examples of accessibility elements may include, but are not limited to, doors, door handles, trunk, hood, or windows of the AD/semi-AD vehicle. Information about the accessibility elements may include locations or swings of the doors, the door handles, the trunk, the hood, or the windows. In embodiments, vehicle model 106 may be stored in a dedicated or shared memory area/unit, which may be volatile or non-volatile.

Accessibility engine 104 is configured to determine a specific spot for the vehicle to stop at a destination for a passenger or driver to ingress or egress the AD/semi-AD vehicle, based at least in part on the sensor data outputted by on-board sensors 102, and vehicle model 106. In particular, accessibility engine 104 is further configured to determine, as part of determining the specific spot for the vehicle to stop at a destination for a passenger or driver to ingress or egress the AD/semi-AD vehicle, accessibility needs of the passenger or driver. The determination of the accessibility needs of the passenger or driver are also based at least in part on at least some of the sensor data outputted by on-board sensors 102. The accessibility needs of the passenger or driver is factored into the determination of the specific stopping spot at the destination.

In embodiments, accessibility engine 104 is configured to determine a specific spot for the vehicle to stop at a destination for a passenger or driver to ingress or egress the AD/semi-AD vehicle, when the AD/semi-AD vehicle is at a final approach distance to the destination. The length of the final approach distance may be application dependent, e.g., depending on the amount of factors to be considered, the amount of sensor data to be employed to analyze the factors, the computing power provided to accessibility engine 104. In general, for a given level of computing power, more sensor data may be processed, and more factors may be considered, if the final approach distance to commence determination is set earlier, however, the surrounding area analyzed may be too soon unless more powerful sensors are employed. On the other hand, if the final approach distance to commence determination is set later, the surrounding area analyzed may be more relevant, and more powerful sensors are not need, but lesser sensor data may be processed, and lesser factors may be considered. Different embodiments may elect different balance and tradeoffs.

On determination of the specific spot for the vehicle to stop at a destination for a passenger or driver to ingress or egress the AD/semi-AD vehicle, accessibility engine 104 may provide the specific spot information to navigation system 110 (e.g., a path planner function of navigation system 110) and accessibility element controllers 112 for navigation system 110 to navigate or assist in navigating the AD/semi-AD vehicle to the specific spot, and for accessibility element controllers 112 to issue controls to the appropriate accessibility elements after stopping at the specific spot.

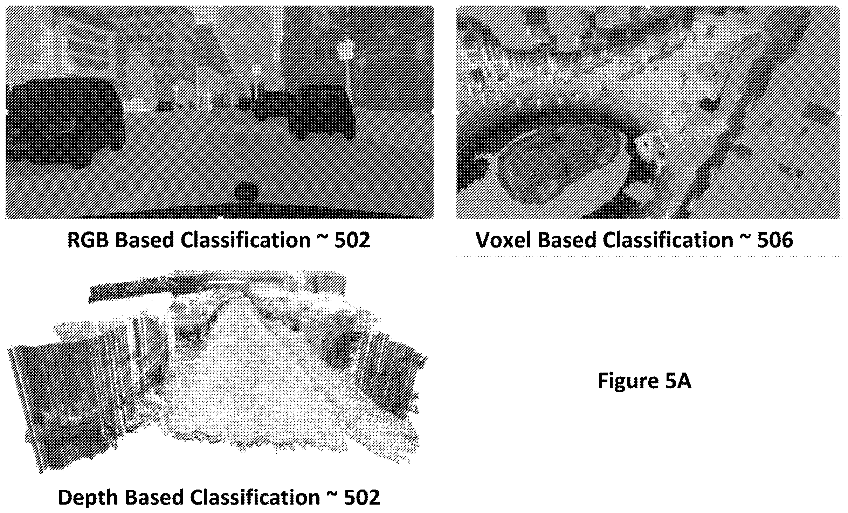

In embodiments, accessibility engine 104 includes main logic 132, object detection classifier 134, environment safety classifier 136 and accessibility classifier 138, operatively coupled with each other. Object detection classifier 134 is configured to provide information that depicts or allows discernment of a presence of objects within the surrounding area of the AD/semi-AD vehicle. In embodiments, object detection classifier 134 is configured to generate a dynamic occupancy grid map of the surrounding area, based at least in part on the sensor data, to provide the information that depicts or allow discernment of a presence of objects within the surrounding area. Figure 5A illustrates three example dynamic occupancy grid maps of the surrounding area that may be generated to facilitate discernment of a presence of objects within the surrounding area.
Example 502 illustrates a dynamic occupancy grid map that employs red-green-blue (RGB) based object classification. In example 502, different gray scale may be employed to denote different classes of objects. Example 504 illustrates a dynamic occupancy grid map that employs depth based object classification. In example 504, different gray scale may be employed to denote different classes of objects as well as proximity of the objects. Example 506 illustrates a dynamic occupancy grid map that employs voxel based object classification. In example 506, different gray scale may be employed to denote different proximity as well as heights of the objects. In practice, a dynamic occupancy grid map may be in color, with different colors depicting different classes of objects, different proximity distances, and/or different heights.

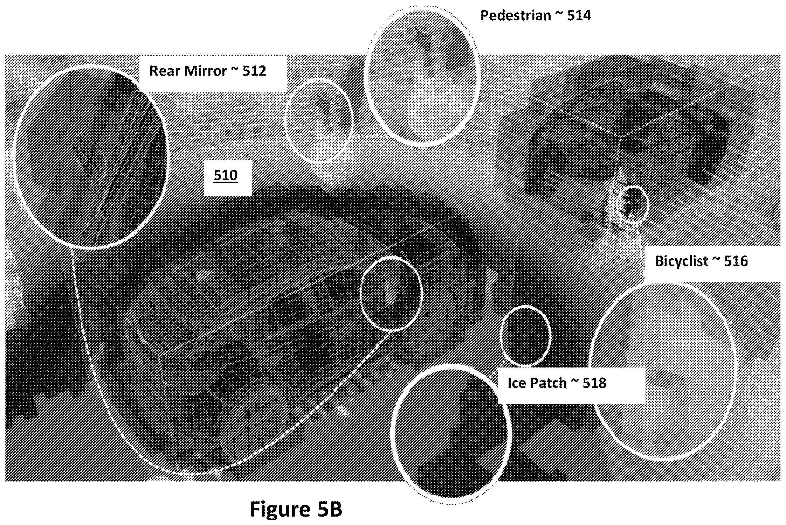

Environment safety classifier 136 may be configured to provide safety related information about the surrounding area of the AD/semi-AD vehicle. In embodiments, environment safety classifier 136 may be configured to provide dynamic segmentation of the surrounding area, and provide safety level information along with confidence level metrics, based at least in part on the sensor data. Figure 5B illustrates an example segmentation presentation with safety level information of the surrounding area. As shown, the different gray scales may denote the difference in safety levels, with lighter gray denotes relatively safer area, and darker gray denotes relatively less safe area. In the example segmentation presentation, objects in the surrounding area, such as rear mirror 512, pedestrian 514, bicyclist 516, and ice patch 518 may also be highlighted. In practice, the segmentation presentation may be in color, with different colors depicting different safety level, e.g., green equals relatively safe, yellow equals caution, and red equals warning for potentially unsafe. In embodiments, the metadata associated with each voxel may contain the confidence level information.

Accessibility classifier 138 is configured to recognize accessibility needs of a passenger or driver, based at least in part on the sensor data. Accessibility needs may include, but are not limited to, a need to access a trunk of the vehicle, a need for extra space to ingress or egress the vehicle, or a need for an American Disability Act (ADA) accessible spot to ingress or egress the vehicle.

Main logic 132 may be configured to determine the specific spot for the vehicle to stop at a destination for a passenger or driver to ingress or egress the AD/semi-AD vehicle, based at least in part on the information provided by object detection classifier 134, environment safety classifier 136 and accessibility classifier 138. In embodiments, main logic 132 may be configured to perform the determination, based further in part on at least some of the sensor data outputted by on-board sensors 102.

As described earlier, each of main logic 132, object detection classifier 134, environment safety classifier 136 and accessibility classifier 138 may perform their respective functions as the AD/semi-AD vehicle is at a final approach distance to the destination. These and other aspects related to the accessibility method and apparatus of the present disclosure for AD/semi-AD will be described in more detail below, after description of the other elements shown in Figure 1.

Continued to refer to Figure 1, in embodiments, AD/semi-AD system 100 may further include sensor fusion unit 108 and communication interface 114. Sensor fusion unit 108 may be configured to merge or combine the sensor data outputted by on-board sensors 102, and generate a three dimensional (3D) representation of the surrounding area of the vehicle. For these embodiments, accessibility engine 104 may determine the specific spot for the vehicle to stop at the destination for the passenger or driver to ingress or egress the vehicle, using the 3D representation, in addition to or in lieu of the sensor data outputted by on-board sensors 102.

Communication interface 114 may be configured to facilitate accessibility engine 104 in accessing and retrieve various information, such as map, parking, roadwork, or weather information from a number of external sources 120 and/or accessibility needs information of a user (e.g., a user accessibility profile 152) from ride sharing service 150 (such as a ride sharing service who ordered the service of the AD/semi-AD vehicle), via network 118. For these embodiments, accessibility engine 104 may determine the specific spot for the vehicle to stop at the destination for the passenger or driver to ingress or egress the vehicle, further based on the map, parking, roadwork, or weather information provided by the various external sources, and/or the accessibility needs information of a user provided by ride sharing service 150.

In embodiments, communication interface 114 may be one or more of a wide range of communication interfaces or subsystems known in the art including, but are not limited to, WiFi communication interfaces/subsystems, 4G/5G/LTE cellular communication interfaces/subsystems, satellite communication interfaces/subsystems, Bluetooth^{®} communication interfaces/subsystems, Near Field Communication (NFC) interfaces/subsystems, and so forth.

Similarly, except for being benefited from the contribution of accessibility engine 104, navigation system 110 and accessibility element controller(s) 112 may be any one of a number of navigation systems and accessibility element controllers known in the art. Likewise, except for being used to assist accessibility engine 104 in obtaining map, weather, parking, roadwork, or traffic information, external sources 120 and network 118 may be any one of a number of information sources and wired/wireless, local/wide-area networks known in the art.

Bus 116 may be any communication bus known in the art, such universal serial bus (USB), peripheral component interconnect (PCI), and so forth. In the case of multiple buses, they may be bridged by one or more bus bridges (not shown).

In embodiments, sensor fusion 108, main logic 132, object detection classifier 134, environment safety classifier 136 and accessibility classifier 138 of accessibility engine 104 may be implemented in hardware, software or combination thereof. Hardware implementations may include Application Specific Integrated Circuits (ASIC), programmable circuits, such as Field Programmable Gate Arrays (FPGA), and so forth. For software implementations, AD/semi-AD system and/or accessibility engine 104 may further include a processor with one or more cores, memory and other associated circuitry (not shown), and sensor fusion 108, main logic 132, object detection classifier 134, environment safety classifier 136 and accessibility classifier 138 may be implemented in assembler language supported by the processor, or any programmable language that can be compiled into machine codes executable by the processor.

In embodiments, in addition to providing the determined stopping spot to navigation system 110 and/or accessibility element controller(s) 112, accessibility engine 104 may also provide the determined stopping spot to the passenger or driver, e.g., to a smartphone or a wearable device adorned by the passenger or driver.

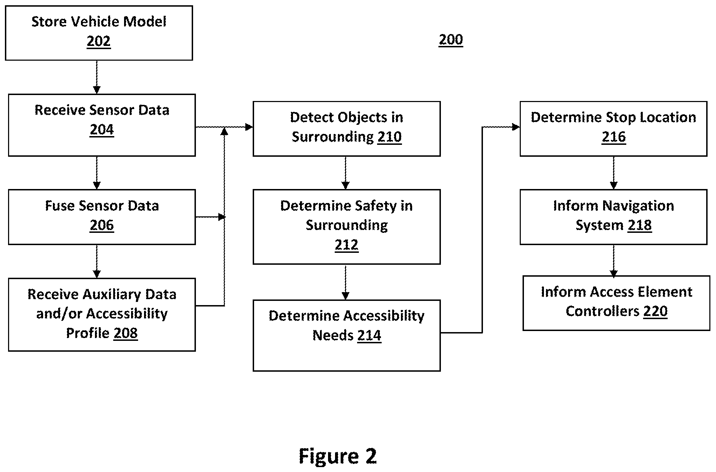

Referring now Figure 2, wherein an example operation flow for determining a specific stopping spot at a destination, according to some embodiments, is illustrated. As shown, example process 200 for determining a specific stopping spot at a destination for a passenger or driver to ingress or egress an AD/semi-AD vehicle may include operations performed at blocks 202-220. The operations may be performed by e.g., earlier described accessibility engine 104.

Process 200 may start at block 202. At block 202, a vehicle model with data describing the accessibility elements of an AD/semi-AD vehicle, their locations, swings and so forth, may be stored in the AD/semi-AD vehicle. Next, at block 204, sensor data outputted by various sensors of the AD/semi-AD vehicle about the surrounding area of the AD/semi-AD vehicle may be received. From block 204, process 200 may proceed to block 206 or block 210.

At block 206, the received sensor data may be optionally fused/merged together, e.g., fused/merged to form a 3D representation of the surrounding area of the AD/semi-AD vehicle. From block 206, process 200 may proceed to block 208 or block 210.

At block 208, auxiliary data, such as map, parking, weather, road work, or traffic may be optionally received into AD/semi-AD vehicle from one or more externals sources through one or more networks. At block 208, accessibility data of a passenger or driver, e.g., in a form of an accessibility profile may be received, e.g., from a ride sharing service. From block 208, process 200 may proceed to block 210.

At block 210, whether proceeded from block 204, 206 or 208, objects in the surrounding area of the AD/semi-AD vehicle may be identified. In embodiments, as described earlier, objects in the surrounding area of the AD/semi-AD vehicle may be identified based at least in part on the sensor data and/or auxiliary data received. In embodiments, a dynamic occupancy grid may be generated, based at least in part on the sensor data and/or auxiliary data received.

At block 212, safety levels of the surrounding area of the AD/semi-AD vehicle may be determined. In embodiments, the surrounding area of the AD/semi-AD vehicle may be segmented and the safety levels of the various segments may be determined, along with confidence level, based at least in part on the sensor data and/or auxiliary data received.

At block 214, accessibility needs of a passenger or driver may be determined, based at least in part on the sensor data and/or auxiliary data received, and/or accessibility information of the passenger or driver received, e.g., from a ride sharing service.

Next, at block 216, the stopping spot at the destination may be determined, based at least in part on the objects and/or safety level of the surrounding area, and accessibility needs determined, which as earlier described may be determined based at least in part on the sensor data and/or auxiliary data received. In embodiments, the stopping spot at the destination may be determined further based in part on some of the sensor data and/or auxiliary data received.

At block 218, the determined stopping spot at the destination may be provided to the navigation system of the AD/semi-AD vehicle. At block 220, the determined stopping spot at the destination may further be provided to the accessibility element controllers of the AD/semi-AD vehicle. In alternate embodiments, in addition, the determined stopping spot at the destination may be wireless communicated to the passenger or driver being picked up.

Further, in alternate embodiments, some of the described operations at blocks 202-220 may be combined or split, or performed in different order.

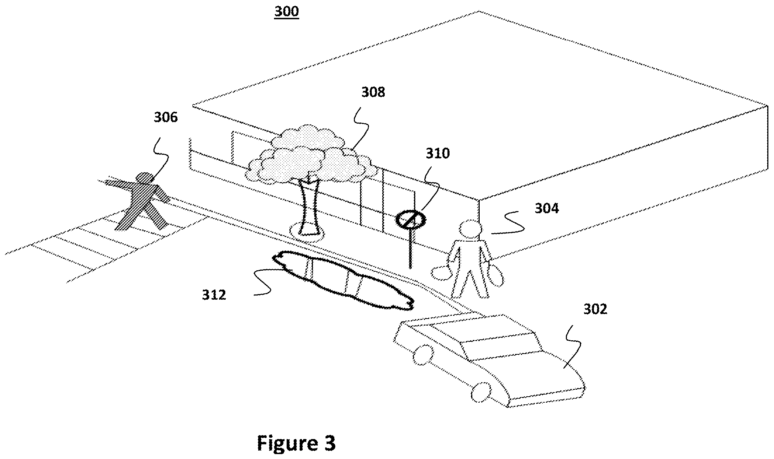

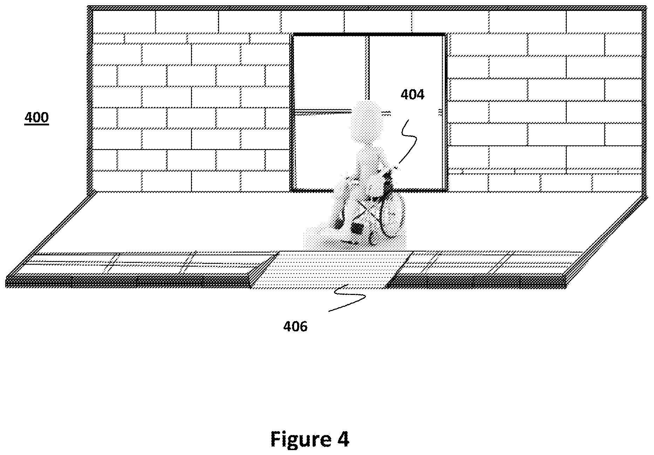

Referring now to Figures 3 and 4, wherein two example scenarios that can benefit from the accessibility method and apparatus of the present disclosure are illustrated. More specifically, Figure 3 illustrate an example scenario 300 of a passenger who just finished shopping, being picked up by an AD/semi-AD vehicle. The passenger is in possession of a number of shopping bags. Figure 4 illustrates an example scenario 400 of a passenger with physical challenges on a wheelchair, being picked up by an AD/semi-AD vehicle.

As illustrated in Figure 3, while AD/semi-AD vehicle making its final approach to the destination, as described earlier, accessibility engine 104 may determine from a dynamic occupancy grid generated from the various sensor and /or auxiliary data presence of objects, presence of objects at the destination (the sidewalk at a shopping mall), such as pedestrian 306 crossing or about to cross on a crosswalk, vegetation such as tree 308, no stopping sign 310, water puddle 312, and so forth. Additionally, accessibility engine 104 may determine the safety level of various segments in the surrounding area, e.g., not safe to stop on or too close to the crosswalk, safe to stop over x feet from the crosswalk, and so forth. Further, accessibility engine may determine passenger 304 needs access to the trunk and/or more space to ingress because passenger 304 is in possession of a number of shopping bags. Based on these objects, safety and accessibility needs, as well as other information, such as whether it is a rainy day, whether there are construction at the sidewalk, and so forth, accessibility engine 104 may then make the determination on the stopping spot at the destination for passenger 304 to ingress AD/semi-AD vehicle 302.

In embodiments, accessibility engine 104 may wireless communicate to e.g., a smartphone or a wearable device of passenger 304, informing passenger 304 that AD/semi-AD vehicle 302 will stop after tree 308, no stop sign 310 and puddle 312.

As illustrated in Figure 4, while AD/semi-AD vehicle making its final approach to the destination, as described earlier, accessibility engine 104 may determine passenger 304 is a physically challenged person on a wheelchair, therefore will need access to the trunk to store the wheelchair, and need to ingress at an American Disability Act (ADA) compliant ramp 406. Accessibility engine 104 may determine the location of the ADA compliant ramp 406 from a dynamic occupancy grid and photos generated from the various sensor and /or auxiliary data. Additionally, accessibility engine 104 may determine the safety level of various segments of the surrounding area, before and after the ADA compliant ramp. Based on these objects, safety and accessibility needs, as well as other information, such as whether it is a rainy day, whether there are constructions at the sidewalk, and so forth, accessibility engine 104 may then make the determination on the stopping spot at the destination (i.e. ADA compliant ramp) for passenger 404 to ingress the AD/semi-AD vehicle.

In embodiments, likewise accessibility engine 104 may wirelessly communicate to e.g., a smartphone or a wearable device of passenger 404, to direct passenger 404 to ADA compliant ramp 406.

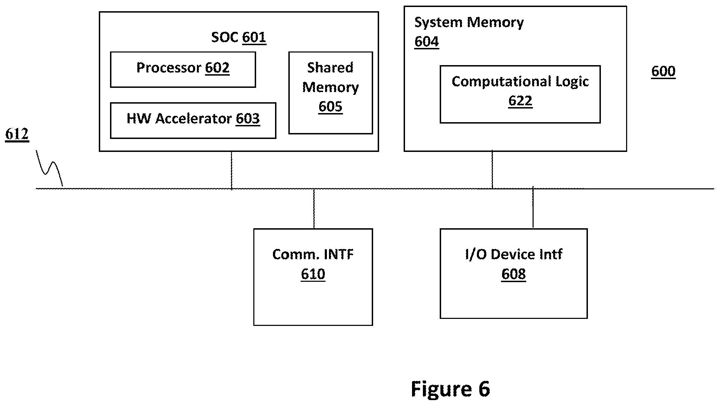

Referring now to Figure 6, wherein a block diagram of a computing apparatus suitable for use as to host the AD/semi-AD system or specifically, the accessibility engine, in accordance with various embodiments, is illustrated. As shown, computing apparatus 600 may include system-on-chip (SOC) 601, and system memory 604. SOC 601 may include processor 602, hardware accelerator 603 and shared memory 605. Processor 602 may include one or more processor cores. Processor 602 may be any one of a number of single or multi-core processors known in the art. Hardware accelerator 603 may be implemented with ASIC or programmable circuits such as FPGA. On package shared memory 605 and off package system memory 604 may include any known volatile or non-volatile memory.

Additionally, computing apparatus 600 may include communication interfaces 610 such as, network interface cards, modems and so forth, and input/output (I/O) device interfaces 608, such as serial bus interfaces for touch screen, keyboard, mouse, and so forth. In embodiments, communication interfaces 610 may support wired or wireless communication, including near field communication. The elements may be coupled to each other via system bus 612, which may represent one or more buses. In the case of multiple buses, they may be bridged by one or more bus bridges (not shown).

Each of these elements may perform its conventional functions known in the art. In particular, system memory 604 may be employed to store a working copy and a permanent copy of the executable code of the programming instructions of the components of accessibility engine 104 implemented in software (i.e., one or more of main logic 132, object detection classifier 134, environment safety classifier 136, and accessibility needs classifier 138). The programming instructions may comprise assembler instructions supported by processor(s) 602 or high-level languages, such as, for example, C, that can be compiled into such instructions.

In embodiments, hardware accelerator 603 may be configured to implement components of accessibility engine 104 in hardware (i.e., one or more of main logic 132, object detection classifier 134, environment safety classifier 136, and accessibility needs classifier 138). For hardware accelerator 603 implemented using programmable circuit such as FPGA, the programmable circuit may be programmed with a bit stream generated from hardware design language codes that implement the functions of the corresponding component(s).

The number, capability and/or capacity of these elements 610-612 may vary between embodiments. The constitutions of these elements 610-612 are otherwise known, and accordingly will not be further described.

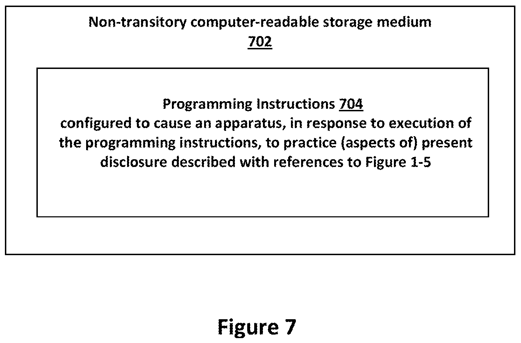

Figure 7 illustrates an example non-transitory computer-readable medium having instructions configured to practice all or selected ones of the operations associated with accessibility engine 104 of AD/semi-AD system 100, in accordance with various embodiments. As illustrated, non-transitory computer-readable medium 702 may include a number of programming instructions or bit streams 704. Programming instructions or bit streams 704 may be configured to enable an apparatus, e.g., an on-board system in a vehicle, in response to execution of the programming instructions or operation of the programmed hardware apparatus, to perform various operations earlier described. In alternate embodiments, programming instructions 704 may be disposed on multiple non-transitory computer-readable storage media 702 instead. In still other embodiments, programming instructions 704 may be encoded in transitory computer readable signals.

Thus, apparatuses, methods and computer-readable medium associated with AD/semi-AD driving with an accessibility engine have been described. While for ease of understanding, the trust data collection, retention and/or sharing technology have been described for autonomous/semi-autonomous driving, the technology may also be practiced with traditional non-autonomous manual vehicles equipped with on-board system as described.

Although certain embodiments have been illustrated and described herein for purposes of description, a wide variety of alternate and/or equivalent embodiments or implementations calculated to achieve the same purposes may be substituted for the embodiments shown and described without departing from the scope of the present disclosure. Therefore, it is manifestly intended that embodiments described herein be limited only by the claims.

Where the disclosure recites "a" or "a first" element or the equivalent thereof, such disclosure includes one or more such elements, neither requiring nor excluding two or more such elements. Further, ordinal indicators (e.g., first, second or third) for identified elements are used to distinguish between the elements, and do not indicate or imply a required or limited number of such elements, nor do they indicate a particular position or order of such elements unless otherwise specifically stated.

## Claims

1. An apparatus (100) for autonomous or semi-autonomous driving, comprising:
an accessibility engine (104) disposed in an autonomous or semi-autonomous driving vehicle to control accessibility elements of the autonomous or semi-autonomous driving vehicle, wherein the accessibility engine (104) is configured to:
receive sensor data from a plurality of sensors (102) disposed in the autonomous or semi-autonomous driving vehicle, and determine a specific spot for the vehicle to stop at a destination for a passenger or driver to ingress or egress the vehicle, based at least in part on the sensor data and a model (106) of the vehicle that includes information about accessibility elements of the vehicle, including determination of accessibility needs of the passenger or driver based at least in part on at least some of the sensor data, wherein the accessibility needs of the passenger or driver are factored into the determination of the specific stop location at the destination; and
**characterised in that** the accessibility engine (104) includes an object detection classifier (134) configured to generate a dynamic occupancy grid map of a surrounding area of the vehicle at least when the vehicle is at a final approach distance to the destination, based at least in part on the sensor data of the plurality of sensors (102), wherein the dynamic occupancy grid map includes information that depicts or allows discernment of a presence of objects within the surrounding area, and wherein the determination of the specific stop location is further based on the information provided by the object detection classifier (134).

2. The apparatus (100) of claim 1, wherein accessibility elements of the vehicle include doors, door handles, rear mirrors, trunk, hood, or windows of the vehicle.

3. The apparatus (100) of claim 1, wherein the model (106) includes descriptions of locations or swings of doors, door handles, rear mirrors, trunk, hood, or windows of the vehicle.

4. The apparatus (100) of claim 1, wherein the accessibility engine (104) is configured to provide the determined specific spot for the vehicle to stop at a destination for a passenger or driver to ingress or egress the vehicle to a navigation subsystem (110) disposed in the vehicle or to a portable device of the passenger or driver.

5. The apparatus (100) of claim 1, wherein the accessibility engine (104) is configured to further cause controls (112) to the accessibility elements to be issued, wherein the controls (112) take into consideration the accessibility needs of the passenger or driver.

6. The apparatus (100) of claim 1, wherein the accessibility engine (104) includes an accessibility classifier (138) configured to recognize accessibility needs of a passenger or driver, at least when the vehicle is at a final approach distance to the destination, based at least in part on the sensor data of the plurality of sensors (102).

7. The apparatus (100) of claim 6, wherein the accessibility needs of the passenger or driver include a selected one of a need to access a trunk of the vehicle, a need for extra space to ingress or egress the vehicle, or a need for an American Disability Act (ADA) accessible spot to ingress or egress the vehicle.

8. The apparatus (100) of claim 1, wherein the accessibility engine (104) includes an environmental safety classifier (136) configured to provide dynamic segmentation of a surrounding area of the vehicle at least when the vehicle is at a final approach distance to the destination, based at least in part on the sensor data of the plurality of sensors (102), wherein the dynamic segmentation includes information that depicts safety levels of various segments of the surrounding area.

9. The apparatus (100) of claim 8, wherein the dynamic segmentation includes information that depicts confidence levels of the safety levels of various segments of the surrounding area.

10. The apparatus (100) of any one of claims 1-9 further comprising a communication interface (114) configured to receive accessibility information of the passenger or driver from a ride sharing service (150), wherein the accessibility engine (104) is configured to determine the specific spot for the vehicle to stop at the destination for the passenger or driver to ingress or egress the vehicle, further based on the accessibility information of the passenger or driver received from the ride sharing service (150).

11. The apparatus (100) of any one of claims 1-9 further comprising a communication interface (114) configured to receive map, parking, roadwork, or weather information from one or more external sources (120), wherein the accessibility engine (104) determines the specific spot further based on the map, parking, roadwork, or weather information.

12. The apparatus (100) of any one of claims 1-5, wherein the accessibility engine (104) includes an accessibility classifier (138) configured to recognize accessibility needs of a passenger or driver, an environmental safety classifier (136) configured to provide dynamic segmentation of a surrounding area of the vehicle, an object detection classifier (134) configured to generate a dynamic occupancy grid map of a surrounding area of the vehicle, all based at least in part on the sensor data of the plurality of sensors (102); and wherein at least one of the accessibility classifier (138), environmental safety classifier (136), or the object detection classifier (134) is implemented in a hardware accelerator.

13. A method for autonomous or semi-autonomous driving, comprising:
receiving, by an accessibility engine (104) disposed in an autonomous or semi-autonomous vehicle, sensor data from a plurality of sensors (102) disposed in the autonomous or semi-autonomous driving vehicle;
determining, by the accessibility engine (104), a specific spot for the vehicle to stop at a destination for a passenger or driver to ingress or egress the vehicle, based at least in part on the sensor data and a model (106) of the vehicle that includes information about accessibility elements of the vehicle, including determination of accessibility needs of the passenger or driver based at least in part on at least some of the sensor data, wherein the accessibility needs of the passenger or driver are factored into the determination of the specific stop location at the destination; and
generating, by an object detection classifier (134), a dynamic occupancy grid map of a surrounding area of the vehicle at least when the vehicle is at a final approach distance to the destination, based at least in part on the sensor data of the plurality of sensors (102), wherein the dynamic occupancy grid map includes information that depicts or allows discernment of a presence of objects within the surrounding area, and wherein the determination of the specific stop location is further based on the information provided by the object detection classifier (134).

14. The method of claim 13, further comprising providing the determined specific spot for the vehicle to stop at a destination for a passenger or driver to ingress or egress the vehicle to a navigation subsystem (110) disposed in the vehicle or to a portable device of the passenger or driver;
causing controls to the accessibility elements to be issued, wherein the controls take into consideration the accessibility needs of the passenger or driver.

## Patentansprüche

1. Vorrichtung (100) für autonomes oder halbautonomes Fahren, umfassend:
eine Zugänglichkeitsmaschine (104), die in einem autonom oder halbautonom fahrenden Fahrzeug angeordnet ist, um Zugänglichkeitselemente des autonom oder halbautonom fahrenden Fahrzeugs zu steuern, wobei die Zugänglichkeitsmaschine (104) dazu ausgelegt ist:
Sensordaten aus einer Vielzahl von Sensoren (102) zu empfangen, die in dem autonom oder halbautonom fahrenden Fahrzeug angeordnet sind, und eine spezifische Position für das Fahrzeug zu ermitteln, um an einem Zielort anzuhalten, damit ein Fahrgast oder ein Fahrer in das Fahrzeug ein- oder aussteigen kann, zumindest teilweise basierend auf den Sensordaten und einem Modell (106) des Fahrzeugs, das Informationen über Zugänglichkeitselemente des Fahrzeugs enthält, einschließlich der Ermittlung von Zugänglichkeitsbedürfnissen des Fahrgasts oder des Fahrers zumindest teilweise basierend auf einigen der Sensordaten, wobei die Zugänglichkeitsbedürfnisse des Fahrgasts oder des Fahrers bei der Ermittlung der spezifischen Halteposition am Zielort berücksichtigt werden; und
**dadurch gekennzeichnet, dass** die Zugänglichkeitsmaschine (104) einen Objekterfassungsklassifikator (134) enthält, der dazu ausgelegt ist, eine dynamische Belegungsgitterkarte eines Umgebungsbereichs des Fahrzeugs zumindest dann zu erzeugen, wenn sich das Fahrzeug in einer endgültigen Annäherungsentfernung vom Zielort befindet, zumindest teilweise basierend auf den Sensordaten der Vielzahl von Sensoren (102), wobei die dynamische Belegungsgitterkarte Informationen enthält, die ein Vorhandensein von Objekten innerhalb des Umgebungsbereichs darstellen oder erkennen lassen, und wobei die Ermittlung der spezifischen Haltestelle ferner auf den durch den Objekterfassungsklassifikator (134) bereitgestellten Informationen basiert.

2. Vorrichtung (100) gemäß Anspruch 1, wobei die Zugangselemente des Fahrzeugs Türen, Türgriffe, Rückspiegel, Kofferraum, Motorhaube oder Fenster des Fahrzeugs umfassen.

3. Vorrichtung (100) gemäß Anspruch 1, wobei das Modell (106) Beschreibungen von Positionen oder Schwenkbereichen von Türen, Türgriffen, Rückspiegeln, Kofferraum, Motorhaube oder Fenstern des Fahrzeugs enthält.

4. Vorrichtung (100) gemäß Anspruch 1, wobei die Zugänglichkeitsmaschine (104) dazu ausgelegt ist, die ermittelte spezifische Position, an der das Fahrzeug an einem Zielort anhalten soll, damit ein Fahrgast oder ein Fahrer in das Fahrzeug ein- oder aussteigen kann, an ein im Fahrzeug angeordnetes Navigationsteilsystem (110) oder an eine tragbare Vorrichtung des Fahrgasts oder des Fahrers zu übertragen.

5. Vorrichtung (100) gemäß Anspruch 1, wobei die Zugänglichkeitsmaschine (104) dazu ausgelegt ist, ferner die Ausgabe von Steuerungen (112) für die Zugänglichkeitselemente zu veranlassen, wobei die Steuerungen (112) die Zugänglichkeitsbedürfnisse des Fahrgasts oder des Fahrers berücksichtigen.

6. Vorrichtung (100) gemäß Anspruch 1, wobei die Zugänglichkeitsmaschine (104) einen Zugänglichkeitsklassifikator (138) enthält, der dazu ausgelegt ist, die Zugänglichkeitsbedürfnisse eines Fahrgasts oder eines Fahrers zumindest dann zu erkennen, wenn sich das Fahrzeug in einer endgültigen Annäherungsentfernung vom Zielort befindet, zumindest teilweise basierend auf den Sensordaten der Vielzahl von Sensoren (102).

7. Vorrichtung (100) gemäß Anspruch 6, wobei die Zugänglichkeitsbedürfnisse des Fahrgasts oder des Fahrers eine Erfordernis enthalten von Zugang zu einem Kofferraum des Fahrzeugs, zusätzlichem Platz zum Ein- oder Aussteigen in das/aus dem Fahrzeug oder einem offiziell ausgewiesenen Behindertenplatz zum Ein- oder Aussteigen in das/aus dem Fahrzeug umfassen.

8. Vorrichtung (100) gemäß Anspruch 1, wobei die Zugänglichkeitsmaschine (104) einen Umgebungssicherheitsklassifikator (136) enthält, der dazu ausgelegt ist, eine dynamische Segmentierung eines Umgebungsbereichs des Fahrzeugs zumindest dann bereitzustellen, wenn sich das Fahrzeug in einer endgültigen Annäherungsentfernung vom Zielort befindet, die zumindest teilweise auf den Sensordaten der Vielzahl von Sensoren (102) basiert, wobei die dynamische Segmentierung Informationen enthält, die Sicherheitsstufen verschiedener Segmente des Umgebungsbereichs darstellen.

9. Vorrichtung (100) gemäß Anspruch 8, wobei die dynamische Segmentierung Informationen enthält, die die Konfidenzniveaus der Sicherheitsniveaus verschiedener Segmente des umgebenden Bereichs darstellen.

10. Vorrichtung (100) gemäß einem der Ansprüche 1-9, ferner umfassend eine Kommunikationsschnittposition (114), die dazu ausgelegt ist, Zugänglichkeitsinformationen des Fahrgasts oder des Fahrers aus einem Mitfahrdienst (150) zu empfangen, wobei die Zugänglichkeitsmaschine (104) dazu ausgelegt ist, die spezifische Position zu ermitteln, an der das Fahrzeug am Zielort anhalten soll, damit der Fahrgast oder der Fahrer in das Fahrzeug ein- oder aussteigen kann, ferner basierend auf den Zugänglichkeitsinformationen des Fahrgasts oder des Fahrers, die aus dem Mitfahrdienst (150) empfangen wurden.

11. Vorrichtung (100) gemäß einem der Ansprüche 1-9, ferner umfassend eine Kommunikationsschnittposition (114), die dazu ausgelegt ist, Karten-, Park-, Straßenbau- oder Wetterinformationen aus einer oder mehreren externen Quellen (120) zu empfangen, wobei die Zugänglichkeitsmaschine (104) die spezifische Position ferner basierend auf den Karten-, Park-, Straßenbau- oder Wetterinformationen ermittelt.

12. Vorrichtung (100) gemäß einem der Ansprüche 1-5, wobei die Zugänglichkeitsmaschine (104) einen Zugänglichkeitsklassifikator (138), der dazu ausgelegt ist, Zugänglichkeitsbedürfnisse eines Fahrgasts oder Fahrers zu erkennen, einen Umgebungssicherheitsklassifikator (136), der dazu ausgelegt ist, eine dynamische Segmentierung eines Umgebungsbereichs des Fahrzeugs bereitzustellen, einen Objekterkennungsklassifikator (134), der dazu ausgelegt ist, eine dynamische Belegungsrasterkarte eines Umgebungsbereichs des Fahrzeugs zu erzeugen, enthält, wobei alle zumindest teilweise auf den Sensordaten der Vielzahl von Sensoren (102) basieren; und wobei zumindest einer des Zugänglichkeitsklassifikators (138), des Umgebungssicherheitsklassifikators (136) oder des Objekterkennungsklassifikators (134) in einem Hardwarebeschleuniger implementiert ist.

13. Verfahren für autonomes oder halbautonomes Fahren, umfassend:
Empfangen von Sensordaten aus einer Vielzahl von Sensoren (102), die in dem autonomen oder halbautonomen Fahrzeug angeordnet sind, durch eine Zugänglichkeitsmaschine (104), die in einem autonom oder halbautonom fahrenden Fahrzeug angeordnet ist;
Ermitteln einer spezifischen Position für das Fahrzeug durch die Zugänglichkeitsmaschine (104), um an einem Zielort anzuhalten, damit ein Fahrgast oder Fahrer in das Fahrzeug ein- oder aussteigen kann, zumindest teilweise basierend auf den Sensordaten und einem Modell (106) des Fahrzeugs, das Informationen über Zugänglichkeitselemente des Fahrzeugs enthält, einschließlich der Ermittlung von Zugänglichkeitsbedürfnissen des Fahrgasts oder Fahrers zumindest teilweise basierend auf zumindest einigen der Sensordaten, wobei die Zugänglichkeitsbedürfnisse des Fahrgasts oder des Fahrers bei der Ermittlung der spezifischen Halteposition am Zielort berücksichtigt werden; und
Erzeugen einer dynamischen Belegungsrasterkarte eines Umgebungsbereichs des Fahrzeugs durch einen Objekterfassungsklassifikator (134) zumindest dann, wenn sich das Fahrzeug in einer endgültigen Annäherungsentfernung vom Zielort befindet, zumindest teilweise basierend auf den Sensordaten der Vielzahl von Sensoren (102), wobei die dynamische Belegungsrasterkarte Informationen enthält, die ein Vorhandensein von Objekten innerhalb des Umgebungsbereichs darstellen oder erkennen lassen, und wobei die Ermittlung der spezifischen Halteposition ferner auf den durch den Objekterfassungsklassifikator (134) bereitgestellten Informationen beruht.

14. Verfahren gemäß Anspruch 13, ferner umfassend das Bereitstellen der ermittelten spezifischen Halteposition, an der das Fahrzeug an einem Zielort anhalten soll, damit ein Fahrgast oder ein Fahrer in das Fahrzeug ein- oder aussteigen kann, einem im Fahrzeug angeordneten Navigationsteilsystem (110) oder einer tragbaren Vorrichtung des Fahrgasts oder des Fahrers bereitgestellt wird;
wobei Steuerungen für die Zugänglichkeitselemente ausgegeben werden, wobei die Steuerungen die Zugänglichkeitsbedürfnisse des Fahrgasts oder des Fahrers berücksichtigen.

## Revendications

1. Appareil (100) pour conduite autonome ou semi-autonome, comprenant :
un moteur d'accessibilité (104) disposé dans un véhicule de conduite autonome ou semi-autonome pour commander des éléments d'accessibilité du véhicule de conduite autonome ou semi-autonome, le moteur d'accessibilité (104) étant configuré pour :
recevoir des données de capteurs provenant d'une pluralité de capteurs (102) disposés dans le véhicule de conduite autonome ou semi-autonome, et déterminer un endroit spécifique où le véhicule doit s'arrêter à une destination pour qu'un passager ou un conducteur entre ou sorte du véhicule, sur la base au moins en partie des données de capteurs et d'un modèle (106) du véhicule qui inclut des informations sur des éléments d'accessibilité du véhicule, y compris la détermination de besoins d'accessibilité du passager ou du conducteur sur la base au moins en partie d'au moins certaines des données de capteurs, les besoins d'accessibilité du passager ou du conducteur étant pris en compte dans la détermination de l'emplacement d'arrêt spécifique à la destination ; et
**caractérisé en ce que** le moteur d'accessibilité (104) inclut un classificateur de détection d'objets (134) configuré pour générer une carte quadrillée d'occupation dynamique d'une zone environnante du véhicule au moins lorsque le véhicule est à une distance d'approche finale de la destination, sur la base au moins en partie des données de capteurs de la pluralité de capteurs (102), la carte quadrillée d'occupation dynamique incluant des informations qui décrivent ou permettent le discernement d'une présence d'objets dans la zone environnante, et la détermination de l'emplacement d'arrêt spécifique étant en outre basée sur les informations fournies par le classificateur de détection d'objets (134).

2. Appareil (100) selon la revendication 1, dans lequel les éléments d'accessibilité du véhicule incluent les portes, les poignées de porte, les rétroviseurs, le coffre, le capot, ou les fenêtres du véhicule.

3. Appareil (100) selon la revendication 1, dans lequel le modèle (106) inclut des descriptions d'emplacements ou de battements de portes, de poignées de porte, de rétroviseurs, de coffre, de capot, ou de fenêtres du véhicule.

4. Appareil (100) selon la revendication 1, dans lequel le moteur d'accessibilité (104) est configuré pour fournir l'emplacement spécifique déterminé où le véhicule doit s'arrêter à une destination pour qu'un passager ou un conducteur entre ou sorte du véhicule à un sous-système de navigation (110) disposé dans le véhicule ou à un dispositif portable du passager ou du conducteur.

5. Appareil (100) selon la revendication 1, dans lequel le moteur d'accessibilité (104) est configuré pour en outre amener des commandes (112) aux éléments d'accessibilité à être émises, les commandes (112) prenant en considération les besoins d'accessibilité du passager ou du conducteur.

6. Appareil (100) selon la revendication 1, dans lequel le moteur d'accessibilité (104) inclut un classificateur d'accessibilité (138) configuré pour reconnaître des besoins d'accessibilité d'un passager ou d'un conducteur, au moins lorsque le véhicule est à une distance d'approche finale de la destination, sur la base au moins en partie des données de capteurs de la pluralité de capteurs (102).

7. Appareil (100) selon la revendication 6, dans lequel les besoins d'accessibilité du passager ou du conducteur incluent un besoin sélectionné parmi un besoin d'accéder à un coffre du véhicule, un besoin d'espace supplémentaire pour entrer ou sortir du véhicule, ou un besoin d'un endroit accessible selon l'American Disability Act (ADA) pour entrer ou sortir du véhicule.

8. Appareil (100) selon la revendication 1, dans lequel le moteur d'accessibilité (104) inclut un classificateur de sécurité environnementale (136) configuré pour fournir une segmentation dynamique d'une zone environnante du véhicule au moins lorsque le véhicule est à une distance d'approche finale de la destination, basée au moins en partie sur les données de capteurs de la pluralité de capteurs (102), la segmentation dynamique incluant des informations qui décrivent les niveaux de sécurité de divers segments de la zone environnante.

9. Appareil (100) selon la revendication 8, dans lequel la segmentation dynamique inclut des informations qui décrivent des niveaux de confiance des niveaux de sécurité de divers segments de la zone environnante.

10. Appareil (100) selon l'une quelconque des revendications 1 à 9 comprenant en outre une interface de communication (114) configurée pour recevoir des informations d'accessibilité du passager ou du conducteur provenant d'un service de covoiturage (150), dans lequel le moteur d'accessibilité (104) est configuré pour déterminer l'endroit spécifique où le véhicule doit s'arrêter à la destination pour que le passager ou le conducteur puisse entrer ou sortir du véhicule, en se basant en outre sur les informations d'accessibilité du passager ou du conducteur reçues du service de covoiturage (150).

11. Appareil (100) selon l'une quelconque des revendications 1 à 9 comprenant en outre une interface de communication (114) configurée pour recevoir des informations de carte, de stationnement, de travaux routiers ou de météo provenant d'une ou de plusieurs sources externes (120), dans lequel le moteur d'accessibilité (104) détermine l'emplacement spécifique en outre sur la base des informations de carte, de stationnement, de travaux routiers, ou de météo.

12. Appareil (100) selon l'une quelconque des revendications 1 à 5, dans lequel le moteur d'accessibilité (104) inclut un classificateur d'accessibilité (138) configuré pour reconnaître des besoins d'accessibilité d'un passager ou d'un conducteur, un classificateur de sécurité environnementale (136) configuré pour fournir une segmentation dynamique d'une zone environnante du véhicule, un classificateur de détection d'objets (134) configuré pour générer une carte quadrillée d'occupation dynamique d'une zone environnante du véhicule, tous basés au moins en partie sur les données de capteurs de la pluralité de capteurs (102) ; et au moins un classificateur parmi le classificateur d'accessibilité (138), le classificateur de sécurité environnementale (136), ou le classificateur de détection d'objets (134) étant mis en œuvre dans un accélérateur matériel.

13. Procédé pour conduite autonome ou semi-autonome, comprenant :
la réception, par un moteur d'accessibilité (104) disposé dans un véhicule autonome ou semi-autonome, de données de capteurs provenant d'une pluralité de capteurs (102) disposés dans le véhicule de conduite autonome ou semi-autonome ;
la détermination, par le moteur d'accessibilité (104), d'un endroit spécifique où le véhicule doit s'arrêter à une destination pour qu'un passager ou un conducteur entre ou sorte du véhicule, sur la base au moins en partie des données de capteurs et d'un modèle (106) du véhicule qui inclut des informations sur des éléments d'accessibilité du véhicule, y compris la détermination de besoins d'accessibilité du passager ou du conducteur sur la base au moins en partie d'au moins certaines des données de capteurs, les besoins d'accessibilité du passager ou du conducteur étant pris en compte dans la détermination de l'emplacement d'arrêt spécifique à la destination ; et
la génération, par un classificateur de détection d'objets (134), d'une carte quadrillée d'occupation dynamique d'une zone environnante du véhicule au moins lorsque le véhicule est à une distance d'approche finale de la destination, sur la base au moins en partie des données de capteurs de la pluralité de capteurs (102), la carte quadrillée d'occupation dynamique incluant des informations qui décrivent ou permettent le discernement d'une présence d'objets dans la zone environnante, et la détermination de l'emplacement d'arrêt spécifique étant en outre basée sur les informations fournies par le classificateur de détection d'objets (134).

14. Procédé selon la revendication 13, comprenant en outre la fourniture de l'endroit spécifique déterminé où le véhicule doit s'arrêter à une destination pour qu'un passager ou un conducteur entre ou sorte du véhicule à un sous-système de navigation (110) disposé dans le véhicule ou à un dispositif portable du passager ou du conducteur ;
le fait d'amener des commandes aux éléments d'accessibilité à être émises, les commandes prenant en considération les besoins d'accessibilité du passager ou du conducteur.
